# EUROPEAN PATENT SPECIFICATION

(11) **EP 2 412 443 B1**
(45) Date of publication and mention of the grant of the patent: **10.02.2016**
(21) Application number: 11172518.0
(22) Date of filing: 04.07.2011
(51) Int. Cl.: B05B 9/08

(54) **Device introduced in a joystick**
In einen Joystick eingeführte Vorrichtung
Dispositif introduit dans une manette de jeu

(30) Priority: 29.07.2010 BR MU9001361 U
(43) Date of publication of application: 01.02.2012
(73) Proprietor: Guarany Indústria e Comércio Ltda., 13308-200 Itú Sao Paulo (BR)
(72) Inventor: Fleury Bellandi, Carlos Alberto, 13306-460 Itú -SP-CEP (BR)
(74) Representative: Zimmermann, Tankred Klaus

(56) References cited:
- WO-A1-96/03036
- US-A- 5 381 962

## Description

The device relates to a joystick that allows manual control of its basic functions for safe and correct operation (to the operator and the environment) of motorized backpack sprayers - equipment used for spraying/atomizing liquids for pest and disease control in agriculture, as well as for vectors of endemic diseases in public health.

By means of this device, the operator can control: the acceleration of the engine, the immediate stopping of the engine by a switch, and the flow of fluid which will get to the spray/atomizer nozzle. Thus, these functions are built on the same set, which can be coupled to the discharge pipe of a motorized backpack sprayer in working position and visible to the operator, so that it can be easily operated with one hand and resulting in better ergonomics and safety during the application of phytosanitaries/household cleaning products.

### DESCRIPTION OF THE PRIOR ART

Generally, the routine of all work forms of manual backpack sprayers/atomizers tends to be laborious and therefore can generate fatigue and risk to the operator, due to the following: working exposed to bad weather, driving loads up to about 30 kg, working with toxic chemicals and, at the same time, having to keep track of various operations, such as the right direction of the drop jet to the chemical target aiming to be reached, the speed pathway - to apply the right dose of product per area (previously calibrated), - of the moment of opening and closing the flow of fluid - to avoid wasting the product, applying amounts above those permitted by law, and the problems of food, environmental and operator contamination (by waste) -, and also to control the speed of the jet application in case of motorized sprayers use.

Based on the problems outlined above, changes in the machinery manufacturing process efforts on clearly concentrating operation commands in a comfortable position and diminishing the need for applying excessive physical force to perform many operations (both for large and small equipment), in order to improve work quality, safety and productivity, to meet the demands of consumers, laws or even the search for a strengthening of the brand - market differential. Given this evolutionary process in the area of spraying equipment, setting up joysticks to facilitate work operations has been a key part in improving the machinery.

According to Murrel (1979), *joystick* is a lever that works in two dimensions and is used when it is required for simultaneous and continuous control in two dimensions, or for multiple operations.

Nowadays, there are some versions of joysticks available on the market of manual motorized equipment to spray/atomize liquid. There are those that integrate a large number of functions (joysticks from the Italian manufacturer Agrimondo^{®}), others with few functions (joysticks from the Turkish manufacturer Taral^{®} - having control of engine speed and a button to stop the engine), as well as many equipment that still work without a joystick and, therefore, have the control commands located in different positions of the equipment.

Generally, even the ones with a joystick have commands positioned on a vertical lever which, despite having a tilt adjustment, makes it difficult to work whenever there is the need of frequently moving the discharge pipe of the equipment up and down and, since one cannot work with more than one tilt of the lever at the same time, it can cause injuries like RSI (repetitive strain injury) in a shorter period of use in comparison to a joystick with horizontal commands like the one that is claimed herein.

WO 96/03036 A1 describes a weed killing apparatus which comprises a hollow chamber having an air inlet and an open end forming a hot air outlet, means for blow in air through the chamber to exit the open end thereof, heating means in the chamber (for heating the air passing through the chamber so that the air exits the outlet end of the chamber as a blast of heated air, and means for introducing moisture into the air flow to mix with the blast of heated air. The foliage of weeds is surface wetted and heated which kills the weeds.

### SUMMARY OF THE INVENTION

It is an object of the invention to provide an improved joystick that allows manual control of its basic functions for safe and correct operation of equipment used for spraying/atomizing liquids for pest and disease control in agriculture, as well as for vectors of endemic diseases in public health.

This object is achieved by a device of claim 1.

In addition to the above advantage, the model presented herein stands out for its simplicity in setting its functions in motion, which impacts positively on aspects of quality and safety in the application discussed above, which is an important aspect in countries of South America, Africa and some Asian regions, where workforce, especially in agriculture, is still characterized by the use of people with a low educational level.

At last, this *joystick* still has a differential in design, like the strength of its components and the low complexity of assembly (unlike, for example, the joysticks of the prior art), features that provide advantages, respectively, of low maintenance and high durability of the system.

### BRIEF DESCRIPTION OF THE DRAWINGS

The present device will be then more briefly described based on an execution example represented in the drawings. The figures show:
Figure 1 -shows a first cross-sectional view of the joystick device.
Figure 2 shows a second cross-sectional view of the joystick device.

### DETAILED DESCRIPTION OF THE DRAWINGS AND THE MODEL

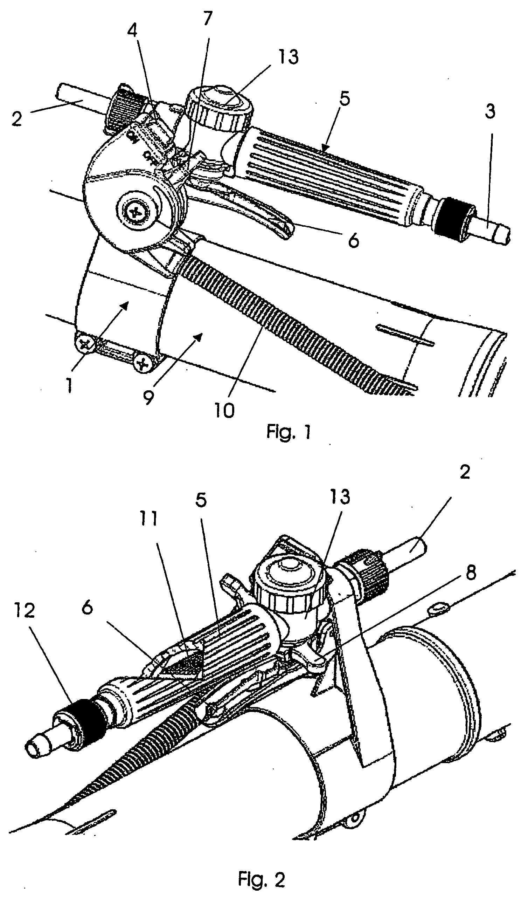

As it can be seen from Figure 1, the control device (joystick) basically consists of a body (1), which has a lower end adapted to couple an air discharge pipe (9) of the motorized backpack sprayer, a spike of fluid inlet (3) to couple a hose connected to the reservoir of chemicals, a spike of fluid outlet (2) with the purpose of coupling a hose connected to the atomizer nozzle, a fastening of the conduit (10) to the throttle cable and to the switch wires connected to the atomizer engine inside the conduit (10).

The joystick is also provided with a housing for the filter (11) inside the handle (5). This filter (11) can be easily accessed and cleaned, even with a full reservoir, by closing the stop valve (12) and releasing the handle (5).

The flow is controlled (open/closed) by means of a valve (13) mounted on the upper body (1), between the handle (5) and the fluid outlet (2), which consists of a control lever (6) that releases the flow of fluid when is pressed, and closes the valve (13) automatically when is released by the action of a spring (not shown).

On the side, a smaller lever (8) is provided that aims at locking the valve (13) both in the closed and in the open position.

The valve lock (13) in the closed position is an important requirement for the operator's safety, which ensures that it does not open accidentally.

The mechanism of the throttle enables the engine acceleration at the desired work point by moving a lever (7) positioned laterally to the valve (13).

Additionally, an electrical switch (4) is mounted in the upper part, next to the lever (7), which aims at quickly stopping the engine.

Once an example of the preferred embodiment have been described, it should be understood that the scope of the present model covers other possible variations, being limited solely by the content of the claim appended thereto, including its possible equivalents.

## Claims

1. Device comprising a joystick, wherein the device basically consists of a body (1), which has a lower end adapted to couple an air discharge pipe (9) of a motorized backpack sprayer, a spike of fluid inlet (3) to couple a hose connected to the reservoir of chemicals, a spike of fluid outlet (2) coupling the hose to the atomizer nozzle,
**characterized by**
comprising fastening means for a conduit (10) to the throttle cable and to the switch wires connected to an atomizer engine inside the conduit (10);
wherein the joystick also comprises a housing for a filter (11) inside a handle (5), the filter (11) can be easily accessed and cleaned, even with a full reservoir, by closing a stop valve(12) and releasing the handle (5);
comprising a flow control (open/close) valve (13) mounted on the upper body (1), between the handle (5) and the fluid outlet (2), which consists of a control lever (6) that releases the flow of fluid when is pressed, and closes the valve (13) automatically when is released by the action of a spring;
comprising on the side, a smaller lever (8) for locking the valve (13) both in the closed and in the open position;
the valve locked (13) in the closed position being an important requirement for the operator's safety, which ensures that the valve does not open accidentally;
comprising a mechanism for the throttle which enables the engine acceleration at the desired work point by moving a lever (7) positioned laterally to the valve (13) and an electrical switch (4) which is mounted in the upper part, next to the lever (7), which comprises means for quickly stopping the engine.

## Patentansprüche

1. Vorrichtung, die einen Steuerknüppel aufweist, wobei die Vorrichtung im Wesentlichen einen Körper (1) mit einem unteren Ende, das angepasst ist, ein Luftaustrittsrohr (9) eines motorisierten Rucksacksprühgeräts zu koppeln, eine Fluideinlassspitze (3), um einen mit dem Chemikalienreservoir verbundenen Schlauch zu koppeln, eine Fluidauslassspitze (2), die den Schlauch mit der Zerstäuberdüse koppelt, umfasst,
**dadurch gekennzeichnet, dass**
dieselbe eine Einrichtung zur Befestigung einer Leitung (10) an dem Drosselkabel und den Schalterdrähten, die mit einem Zerstäubermotor innerhalb der Leitung (10) verbunden sind, aufweist;
wobei der Steuerknüppel außerdem ein Gehäuse für ein Filter (11) innerhalb eines Griffs (5) aufweist, das Filter (11) selbst bei vollem Reservoir durch Schließen eines Absperrventils (12) und Freigeben des Griffs (5) leicht zugänglich ist und zu reinigen ist;
dieselbe ein Flusssteuerungs-(Öffnen/Schließen-)Ventil (13) aufweist, das an dem oberen Körper (1) zwischen dem Griff (5) und dem Fluidauslass (2) befestigt ist, das einen Steuerhebel (6) umfasst, der den Fluidfluss freigibt, wenn derselbe gedrückt wird, und das Ventil (13) automatisch schließt, wenn derselbe durch die Einwirkung einer Feder freigegeben wird;
dieselbe an der Seite einen kleineren Hebel (8) zum Sperren des Ventils (13) sowohl in der geschlossenen als auch in der offenen Position aufweist;
das in der geschlossenen Position gesperrte Ventil (13) eine wichtige Voraussetzung für die Bedienersicherheit ist, die sicherstellt, dass das Ventil sich nicht unbeabsichtigt öffnet;
dieselbe einen Mechanismus für die Drosselklappe, der die Motorbeschleunigung an dem gewünschten Arbeitspunkt durch Bewegen eines seitlich zu dem Ventil (13) positionierten Hebels (7) ermöglicht, und einen in dem oberen Teil neben dem Hebel (7) befestigten elektrischen Schalter (4) aufweist, der eine Einrichtung für ein schnelles Anhalten des Motors aufweist.

## Revendications

1. Dispositif comprenant une manette de commande, dans lequel le dispositif se compose essentiellement d'un corps (1) qui présente une extrémité inférieure adaptée pour coupler un tuyau d'évacuation d'air (9) d'un pulvérisateur à dos motorisé, une pointe d'entrée de fluide (3) pour coupler un tuyau flexible connecté au réservoir de produits chimiques, une pointe de sortie de fluide (2) couplant le tuyau flexible à la tuyère de pulvérisateur,
**caractérisé par le fait**
**qu'**il comprend un moyen de fixation d'un conduit (10) au câble d'étrangleur et aux câbles de commutation connectés à un moteur d'atomiseur à l'intérieur du conduit (10);
dans lequel la manette de commande comprend également un logement pour un filtre (11) à l'intérieur d'une poignée (5), le filtre (11) peut être facilement accessible et nettoyé, même avec un réservoir plein, en fermant une soupape d'arrêt (12) et en relâchant la poignée (5);
**qu'**il comprend une soupape de commande de flux (fermeture/ ouverture) (13) montée sur le corps supérieur (1), entre la poignée (5) et la sortie de fluide (2), qui consiste en un levier de commande (6) qui libère l'écoulement de fluide lorsqu'il est pressé, et ferme la soupape (13) automatiquement lorsqu'il est relâché par l'action d'un ressort;
**qu'**il comprend sur le côté un levier plus petit (8) pour verrouiller la soupape (13) tant en position fermée qu'en position ouverte;
la soupape verrouillée (13) dans la position fermée étant une condition importante pour la sécurité de l'opérateur, ce qui assure que la soupape ne s'ouvre pas accidentellement;
**qu'**il comprend un mécanisme pour l'étranglement qui permet une accélération de moteur au point de travail souhaité en déplaçant un levier (7) positionné latéralement par rapport à la soupape (13) et un interrupteur électrique (4) qui est monté dans la partie supérieure, à côté du levier (7), qui comprend un moyen pour arrêter rapidement le moteur.
